# EUROPEAN PATENT SPECIFICATION

(11) **EP 2 482 509 B1**
(45) Date of publication and mention of the grant of the patent: **05.06.2013**
(21) Application number: 11152906.1
(22) Date of filing: 01.02.2011
(51) Int. Cl.: H04L 27/26, H04L 27/34

(54) **Communication devices with envelope extraction and related methods**
Kommunikationsvorrichtungen mit Hüllkurvenextraktion und zugehörige Verfahren
Dispositifs de communication dotés d'extraction d'enveloppe et procédés correspondants

(43) Date of publication of application: 01.08.2012
(73) Proprietor: Research In Motion Limited, Waterloo, ON N2L 3W8 (CA)
(72) Inventor: Kravets, Oleksiy, Waterloo Ontario N2L 3W8 (CA)
(74) Representative: Bryn-Jacobsen, Caelia

(56) References cited:
- EP-A2- 2 083 542
- JINSEONG JEONG ET AL: "Wideband envelope tracking power amplifier with reduced bandwidth power supply waveform", MICROWAVE SYMPOSIUM DIGEST, 2009. MTT '09. IEEE MTT-S INTERNATIONAL, IEEE, PISCATAWAY, NJ, USA, 7 June 2009 (2009-06-07), pages 1381-1384, XP031490785, ISBN: 978-1-4244-2803-8
- SANKALP MODI ET AL: "A limited bandwidth envelope follower for efficiency enhancement in a linear Power Amplifier in broadband transmitters", CIRCUITS AND SYSTEMS WORKSHOP: SYSTEM-ON-CHIP - DESIGN, APPLICATIONS, INTEGRATION, AND SOFTWARE, 2008 IEEE DALLAS, IEEE, PISCATAWAY, NJ, USA, 19 October 2008 (2008-10-19), pages 1-4, XP031368236, ISBN: 978-1-4244-2955-4

## Description

### Technical Field

This application relates to the field of communications, and more particularly, to wireless communications systems and related methods.

### Background

Cellular communication systems continue to grow in popularity and have become an integral part of both personal and business communications. Cellular telephones allow users to place and receive phone calls most anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multi-function devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. For example, one particularly advantageous modulation scheme is a Quadrature modulation, which may be used in third and fourth generation cellular transceivers. Quadrature modulation and demodulation circuits may create linearity issues with power amplifiers and sometimes suffer poor antenna match. This can cause some degradation of total radiated power (TRP) and raise harmonic interference issues because of the greater non-linearity of a power amplifier.

Another modulation approach is a polar modulation, which may be more power efficient than Quadrature modulation approaches. Nevertheless, cellular devices that use polar modulation circuits may become overly complex when designed to transmit large bandwidth signals, for example, third and fourth generation cellular transceiver signals. For example, broadband applications in polar modulation circuits may incur a complicated phase locked loop (PLL) design, onerous expansion of signal bandwidth during polar modulation processing, and a difficult power amplifier design. On the other hand, Quadrature modulation devices may more readily handle broadband applications, but also may consume more power.

JINSEONG JEONG ET al, "Wideband envelope tracking power amplifier with reduced bandwidth power supply waveform" (XP031490785), is directed to a technique to reduce the bandwidth of a dynamic power supply waveform for use in wideband envelope tracking power amplifiers. The technique reduces the bandwidth of the dynamic power supply voltage, thereby allowing better efficiency for the dynamic power supply.

SANKALP MODI ET AL,"A limited bandwidth envelope follower for efficiency enhancement in a linear Power Amplifier in broadband transmitters", is directed to a technique using a switched power supply that is modulated with a limited bandwidth, while an amplitude modulated signal, which may be predistorted, is fed to the Power Amplifier input.

European Patent Application EP 2 083 542 A2, in the name of FUJITSU LTD, is directed to a power amplifying apparatus where a bandwidth limitation process is performed on an envelope signal.

### Brief Description of the Drawings

FIG. 1 is a schematic block diagram of an example embodiment of a communications device.

FIG. 2 is a detailed schematic block diagram of an example embodiment of a communications device.

FIG. 3 is a flowchart illustrating operation of the communications device of FIG. 2.

FIG. 4 is a schematic block diagram illustrating example components of a mobile wireless communications device that may be used with the communication devices of FIGS. 1-2.

### Detailed Description of the Preferred Embodiment

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout, and prime notation is used to indicate similar elements in alternative embodiments.
An aspect is directed to a communications device. The communications device comprising an encoder configured to generate digital baseband In-phase (I) and Quadrature (Q) signals, and a processor coupled to the encoder and configured to extract at least one envelope characteristic from the digital baseband I and Q signals based upon a bandwidth of the digital baseband I and Q signals. The communications device further comprising a power amplifier coupled downstream from the processor and configured to generate an amplified I and Q signal based upon the at least one envelope characteristic.

An aspect is directed to a communications device. The communications device may include an encoder configured to generate digital baseband In-phase (I) and Quadrature (Q) signals, and a processor coupled to the encoder and configured to extract at least one envelope characteristic from the digital baseband I and Q signals based upon a bandwidth of the digital baseband I and Q signals. The communications device may further include a power amplifier coupled downstream from the processor and configured to generate an amplified I and Q signal based upon the at least one envelope characteristic.

More specifically, the processor may be configured to extract the at least one envelope characteristic from the digital baseband I and Q signals to generate near constant envelope I and Q signals when the bandwidth of an amplitude of the digital baseband I and Q signals is less than a threshold value. Also, the processor may be configured to extract the at least one envelope characteristic from at least a part of a spectrum of the digital baseband I and Q signals when the bandwidth of the digital baseband I and Q signals is greater than a threshold value.

In some embodiments, the communications device may further comprise I and Q circuits coupled between the processor and the power amplifier. Each of the I and Q circuits may comprise a digital-to-analog converter (DAC), a low pass filter coupled to an output of the DAC, and a mixer coupled to an output of the low pass filter.

Additionally, the communications device may further comprise an adder configured to combine outputs from the mixers in the I and Q circuits and generate a pre-amplification signal for the power amplifier. The communications device may further include an oscillator, and a frequency divider coupled thereto and cooperating with the mixers for phase shifting the I and Q phase signals by ninety degrees. The communications device may also comprise an antenna coupled to the power amplifier. For example, the digital baseband I and Q signals may comprise at least one of a Long Term Evolution (LTE) Advanced 3GPP baseband signal, and a IEEE 802.16m (WiMAX) baseband signal.

Another aspect is directed to a method of operating a communications device. The method may comprise using an encoder to generate digital baseband I and Q signals, using a processor coupled to the encoder to extract at least one envelope characteristic from the digital baseband I and Q signals based upon a bandwidth of the digital baseband I and Q signals, and using a power amplifier coupled downstream from the processor to generate an amplified I and Q signal based upon the at least one envelope characteristic.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

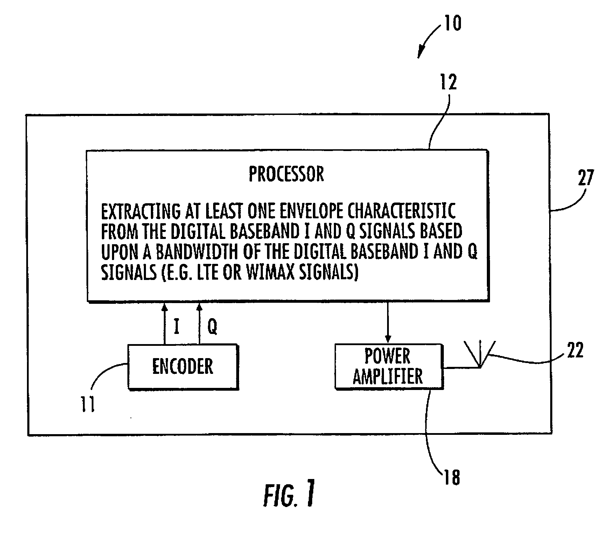

Referring now to FIG. 1, a wireless communication system **10** according to the present disclosure is now described. The communications device **10** illustratively includes a housing **27,** an encoder **11** carried by the housing and configured to generate digital baseband I and Q signals, and a processor **12** carried by the housing and coupled to the encoder and configured to extract at least one envelope characteristic from the digital baseband I and Q signals based upon a bandwidth of the digital baseband I and Q signals. The communications device **10** illustratively includes a power amplifier **18** carried by the housing **27,** coupled downstream from the processor **12,** and configured to generate an amplified I and Q signal based upon the at least one envelope characteristic. The communications device **10** illustratively includes an antenna **22** coupled to the power amplifier **18.**

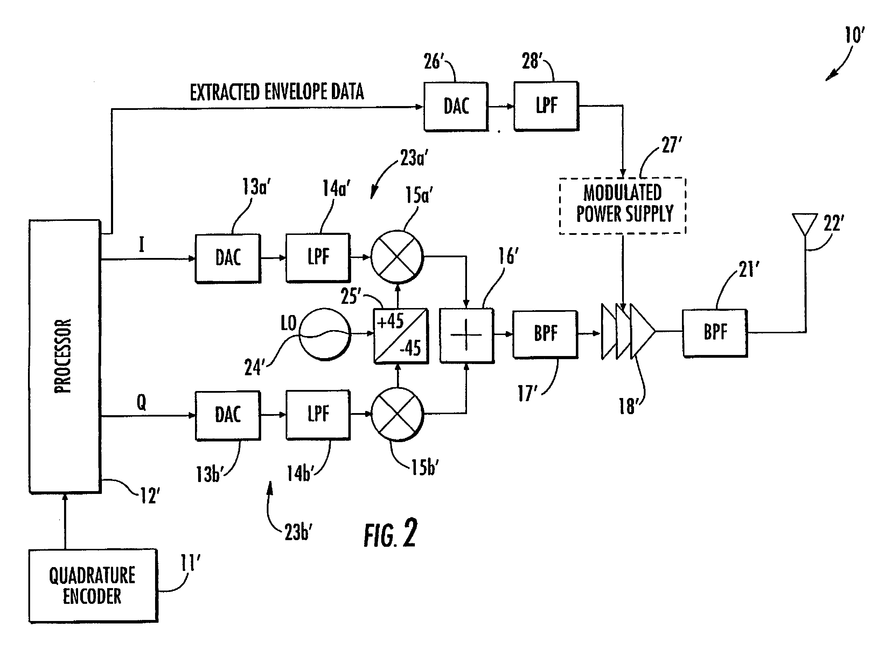

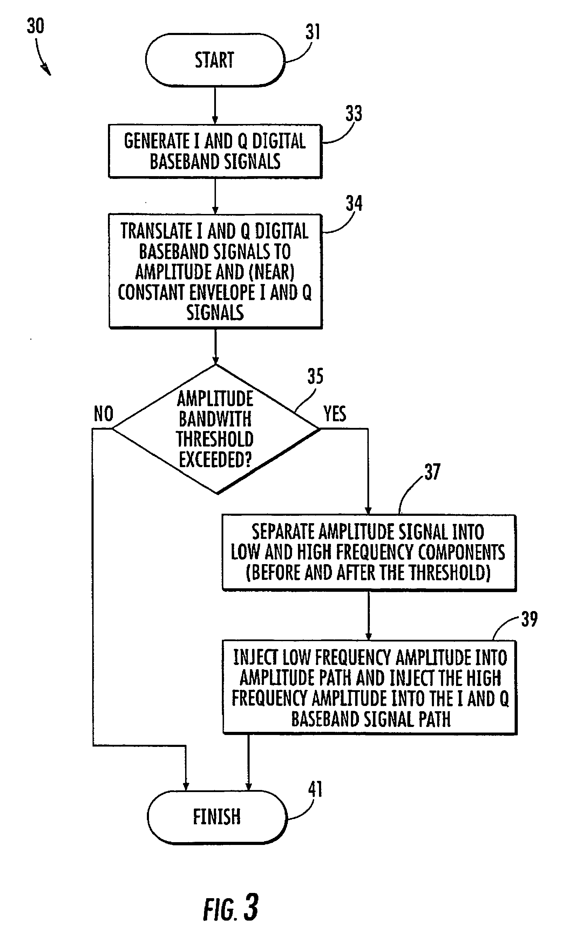

Referring now additionally to FIG. 2, another embodiment of the communications device **10** is now described. In this embodiment of the communications device **10',** those elements already discussed above with respect to FIG. 1 are given prime notation and most require no further discussion herein. Moreover, with reference additionally to FIG. 3, a flowchart **30** illustrates a method of operating the wireless communication system **10'** (Block **31**).

This embodiment differs from the previous embodiment in that the communications device **10'** further includes several additional components between the antenna **22'** and the processor **12'.** In this embodiment, the processor **12'** receives the digital baseband I and Q signals and determines bandwidth characteristics for the signals (Blocks **33-35**), of course, this is subsequent to translating the digital baseband I and Q signals into amplitude and near constant (constant in certain applications) envelope I and Q signals. Moreover, the processor **12'** illustratively stores a bandwidth threshold value. When the amplitude bandwidth of the digital baseband I and Q signals is less than the threshold value, the processor **12'** is configured to extract the at least one envelope characteristic from the digital baseband I and Q signals to generate constant or near constant envelope I and Q signals. In other words, the processor **12'** extracts substantially all of the envelope data from the digital baseband I and Q signals.

The processor **12'** determines whether the amplitude bandwidth threshold is exceeded by first passing the amplitude signal through fast Fourier transform function to convert the signal to the frequency domain. Once in the frequency domain, the determination regarding amplitude bandwidth is made.

Alternatively, when the bandwidth of an amplitude of the digital baseband I and Q signals is greater than the threshold value, the processor **12'** is be configured to extract the at least one envelope characteristic from at least a part of a spectrum of the digital baseband I and Q signals (Blocks **37 and 39**). In other words, the processor **12'** only removes the envelope data from certain portions of the digital baseband I and Q signals spectrum. (Block **41**). More specifically, the processor **12'** separates the amplitude signal into low and high frequency components and injects the former into the amplitude path (extracted envelope data path **26'-28',** including the low pass filter) and the latter into the digital baseband I and Q signal path.

Advantageously, the removal of the envelope data provides a near constant envelope signal for amplification by the power amplifier **18'.** With a near constant envelope signal, the power amplifier **18'** can be operated in a saturated mode, which is a substantially more power efficient mode of operation. More so, the processor **18'** does not expend unnecessary resources removing all envelope data from wideband signals. For example, the digital baseband I and Q signals may each comprise at least one of a Long Term Evolution (LTE) Advanced 3GPP baseband signal, and a IEEE 802.16m (WiMAX) baseband signal. In particular, the processor **12'** only removes a portion of the envelope data from the wideband digital baseband I and Q signals, thereby reducing the complexity of the processor digital signal processing modules.

The communications device **10'** illustratively includes I and Q circuits **23a'-23b'** coupled between the processor **12'** and the power amplifier **18'.** Each of the I and Q circuits **23a'-23b'** illustratively includes a digital-to-analog converter (DAC) **13a'-13b',** a low pass filter **14a'-14b'** coupled to an output of the DAC, and a mixer **15a'-15b'** coupled to an output of the low pass filter. Additionally, the communications device **10'** illustratively includes an adder **16'** configured to combine outputs from the mixers **15a'-15b'** in the I and Q circuits and generate a pre-amplification signal for the power amplifier **18'.** The communications device **10'** illustratively includes an oscillator **24',** and a frequency divider **25'** coupled thereto and cooperating with the mixers **15a'-15b'** for phase shifting the I and Q phase signals by ninety degrees. The communications device **10'** illustratively includes a band pass filter **17'** coupled between the power amplifier **18'** and the adder **16',** and a band pass filter **21'** coupled between the antenna **22'** and the power amplifier.

The communications device **10'** illustratively includes a path coupling the processor **12'** and the power amplifier **18'.** The path illustratively includes a DAC **26',** a low pass filter **28'** coupled thereto, and a modulated power supply **27'** (shown with shadowed lines) coupled between the low pass filter and the power amplifier **18'.** As will be appreciated by the skilled person, the extracted envelope data is used to modulate the power supply **27'** to effect the reintroduction of the envelope data into the transmitted signal. As will be appreciated by the skilled person, the extracted envelope data may be reintroduced in other ways.

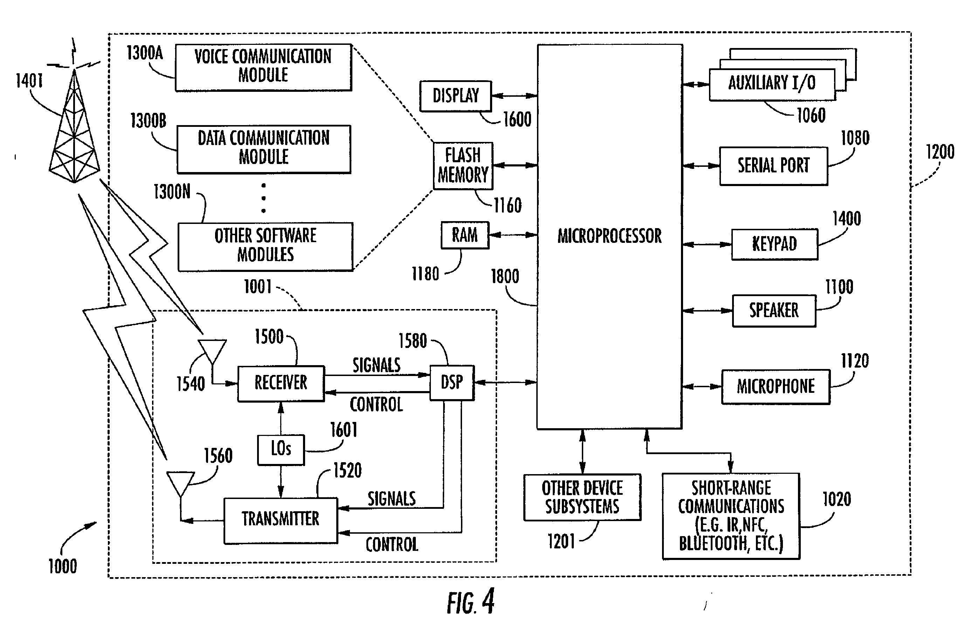

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), Global System for Mobile Communications (GSM), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications device (10, 10') comprising:
an encoder (11, 11') configured to generate digital baseband In-phase (I) and Quadrature (Q) signals;
the device being **characterised by** a processor (12, 12') coupled to said encoder and configured to extract at least one envelope characteristic from the digital baseband I and Q signals based upon a bandwidth of the digital baseband I and Q signals; and
a power amplifier (18, 18') coupled downstream from said processor and configured to generate an amplified I and Q signal based upon the at least one envelope characteristic.

2. The communications device (10, 10') according to Claim 1 wherein said processor (12, 12') is configured to extract the at least one envelope characteristic from the digital baseband I and Q signals to generate near constant envelope I and Q signals when the bandwidth of the digital baseband I and Q signals is less than a threshold value.

3. The communications device (10, 10' ) according to Claim 1 wherein said processor (12, 12') is configured to extract the at least one envelope characteristic from at least a part of a spectrum of the digital baseband I and Q signals when the bandwidth of an amplitude signal of the digital baseband I and Q signals is greater than a threshold value.

4. The communications device (10, 10') according to Claim 1 further comprising I and Q circuits (23a'-23b') coupled between said processor and said power amplifier.

5. The communications device (10, 10') according to Claim 4 wherein each of said I and Q circuits (23a'-23b') comprises a digital-to-analog converter {DAC} (13a', 13b'), a low pass filter (14a', 14b') coupled to an output of said DAC, and a mixer (15a', 15b') coupled to an output of said low pass filter.

6. The communications device (10, 10') according to Claim 5 further comprising an adder (16') configured to combine outputs from said mixers (15a', 15b') in said I and Q circuits (23a', 23b') and generate a pre-amplification signal for said power amplifier (18, 18').

7. The communications device (10, 10') according to Claim 6 further comprising an oscillator (24'), and a frequency divider (25') coupled thereto and cooperating with said mixers (15a', 15b') for phase shifting the I and Q phase signals by ninety degrees.

8. The communications device (10, 10') according to Claim 1 further comprising an antenna (22, 22') coupled to said power amplifier (18, 18').

9. The communications device (10, 10') according to Claim 1 wherein the digital baseband I and Q signals comprise at least one of a Long Term Evolution (LTE) Advanced 3GPP baseband signal, and a IEEE 802.16m (WiMAX) baseband signal.

10. A method of operating a communications (10, 10') device comprising:
using an encoder (11, 11') to generate digital baseband In-phase (I) and Quadrature (Q) signals;
the method being **characterised by** using a processor (12, 12') coupled to the encoder to extract at least one envelope characteristic from the digital baseband I and Q signals based upon a bandwidth of the digital baseband I and Q signals; and
using a power amplifier (18, 18') coupled downstream from the processor to generate an amplified I and Q signal based upon the at least one envelope characteristic.

11. The method according to Claim 10 further comprising using the processor (12, 12') to extract the at least one envelope characteristic from the digital baseband I and Q signals to generate near constant envelope I and Q signals when the bandwidth of an amplitude signal of the digital baseband I and Q signals is less than a threshold value.

12. The method according to Claim 10 further comprising using the processor (12, 12') to extract the at least one envelope characteristic from at least a part of a spectrum of the digital baseband I and Q signals when the bandwidth of the digital baseband I and Q signals is greater than a threshold value.

13. The method according to Claim 10 further comprising using an antenna (22, 22') coupled to the power amplifier (18, 18') to transmit the amplified I and Q signal.

14. The method according to Claim 10 wherein the digital baseband I and Q signals comprise at least one of a Long Term Evolution (LTE) Advanced 3GPP baseband signal, and a IEEE 802.16m (WiMAX) baseband signal.

## Patentansprüche

1. Eine Kommunikationsvorrichtung (10, 10'), die aufweist:
einen Codierer (11, 11'), der konfiguriert ist zum Erzeugen von digitalen Basisband-In-Phase- (I) und Quadratur (Q)-Signalen;
wobei die Vorrichtung **gekennzeichnet ist durch**
einen Prozessor (12, 12'), der mit dem Codierer gekoppelt ist und
konfiguriert ist zum Extrahieren zumindest einer Einhüllende-Charakteristik aus den digitalen Basisband-I- und Q-Signalen basierend auf einer Bandbreite der digitalen Basisband-I- und Q-Signale; und
einen Leistungsverstärker (18, 18'), der stromabwärts von dem Prozessor gekoppelt ist und konfiguriert ist zum Erzeugen eines verstärkten I- und Q-Signals basierend auf der zumindest einen Einhüllende-Charakteristik.

2. Die Kommunikationsvorrichtung (10, 10') gemäß Anspruch 1, wobei der Prozessor (12, 12') konfiguriert ist zum Extrahieren der zumindest einen Einhüllende-Charakteristik aus den digitalen Basisband-I- und Q-Signalen, um I- und Q-Signale mit nahezu konstanter Einhüllenden zu erzeugen, wenn die Bandbreite der digitalen Basisband-I- und Q-Signale geringer als ein Schwellenwert ist.

3. Die Kommunikationsvorrichtung (10, 10') gemäß Anspruch 1, wobei der Prozessor (12, 12') konfiguriert ist zum Extrahieren der zumindest einen Einhüllende-Charakteristik aus zumindest einem Teil eines Spektrums der digitalen Basisband-I- und Q-Signale, wenn die Bandbreite eines Amplitudensignals der digitalen Basisband-I- und Q-Signale größer als ein Schwellenwert ist.

4. Die Kommunikationsvorrichtung (10, 10') gemäß Anspruch 1, die weiter l-und Q-Schaltungen (23a'-23b') aufweist, die zwischen dem Prozessor und dem Leistungsverstärker gekoppelt sind.

5. Die Kommunikationsvorrichtung (10, 10') gemäß Anspruch 4, wobei jede der I- und Q-Schaltungen (23a'-23b') einen Digital-zu-Analog-Wandler (DAC - digital-to-analog converter) (13a', 13b'), einen Tiefpassfilter (14a', 14b'), der an einen Ausgang des DACs gekoppelt ist, und einen Mischer (15a', 15b') aufweist, der an einen Ausgang des Tiefpassfilters gekoppelt ist.

6. Die Kommunikationsvorrichtung (10, 10') gemäß Anspruch 5, die weiter einen Addierer (16') aufweist, der konfiguriert ist zum Kombinieren von Ausgaben von den Mischern (15a', 15b') in den 1- und Q-Schaltungen (23a', 23b') und Erzeugen eines Vorverstärkungssignals für den Leistungsverstärker (18, 18').

7. Die Kommunikationsvorrichtung (10, 10') gemäß Anspruch 6, die weiter aufweist einen Oszillator (24') und einen Frequenzteiler (25'), der mit diesem gekoppelt ist und mit den Mischern (15a', 15b') zusammenarbeitet zum Phasenverschieben der I- und Q-Phasen-Signale um neunzig Grad.

8. Die Kommunikationsvorrichtung (10, 10') gemäß Anspruch 1, die weiter eine Antenne (22, 22') aufweist, die mit dem Leistungsverstärker (18, 18') gekoppelt ist.

9. Die Kommunikationsvorrichtung (10, 10') gemäß Anspruch 1, wobei die digitalen Basisband-I- und Q-Signale zumindest eines aus einem "LTE (Long Term Evolution) Advanced 3GPP"-Basisbandsignal und einem "IEEE 802.16m (WiMAX)"-Basisbandsignal aufweisen.

10. Ein Verfahren zum Betreiben einer Kommunikationsvorrichtung (10, 10'), das aufweist:
Verwenden eines Codierers (11, 11') zum Erzeugen von digitalen Basisband-In-Phase- (I) und Quadratur (Q)-Signalen;
wobei das Verfahren **gekennzeichnet ist durch**
Verwenden eines Prozessors (12, 12'), der mit dem Codierer gekoppelt ist,
zum Extrahieren zumindest einer Einhüllende-Charakteristik aus den digitalen Basisband-I- und Q-Signalen basierend auf einer Bandbreite der digitalen Basisband-I- und Q-Signale; und
Verwenden eines Leistungsverstärkers (18, 18'), der stromabwärts von dem Prozessor gekoppelt ist, zum Erzeugen eines verstärkten 1- und Q-Signals basierend auf der zumindest einen Einhüllende-Charakteristik.

11. Das Verfahren gemäß Anspruch 10, das weiter aufweist ein Verwenden des Prozessors (12, 12') zum Extrahieren der zumindest einen Einhüllende-Charakteristik aus den digitalen Basisband-I- und Q-Signalen, um 1- und Q-Signale mit nahezu konstanter Einhüllenden zu erzeugen, wenn die Bandbreite eines Amplitudensignals der digitalen Basisband-I- und Q-Signale geringer als ein Schwellenwert ist.

12. Das Verfahren gemäß Anspruch 10, das weiter aufweist ein Verwenden des Prozessors (12, 12') zum Extrahieren der zumindest einen Einhüllende-Charakteristik aus zumindest einem Teil eines Spektrums der digitalen Basisband-I- und Q-Signale, wenn die Bandbreite der digitalen Basisband-I- und Q-Signale größer als ein Schwellenwert ist.

13. Das Verfahren gemäß Anspruch 10, das weiter aufweist ein Verwenden einer Antenne (22, 22'), die mit dem Leistungsverstärker (18, 18') gekoppelt ist, um das verstärkte I- und Q-Signal zu senden.

14. Das Verfahren gemäß Anspruch 10, wobei die digitalen Basisband-I- und Q-Signale zumindest eines aus einem "LTE (Long Term Evolution) Advanced 3GPP"-Basisbandsignal und einem "IEEE 802.16m (WiMAX)"-Basisbandsignal aufweisen.

## Revendications

1. Dispositif de communication (10, 10') comprenant :
un codeur (11, 11') configuré pour produire des signaux numériques en bande de base en phase (I) et en quadrature (Q) ;
le dispositif étant **caractérisé par** :
un processeur (12, 12') couplé audit codeur (11, 11') et configuré pour extraire au moins une caractéristique d'enveloppe des signaux numériques I et Q en bande de base en fonction d'une largeur de bande des signaux numériques I et Q en bande de base ; et
un amplificateur de puissance (18, 18') couplé en aval dudit processeur et configuré pour produire un signal I et Q amplifié en fonction de ladite au moins une caractéristique d'enveloppe.

2. Dispositif de communication (10, 10') selon la revendication 1, dans lequel ledit processeur (12, 12') est configuré pour extraire ladite au moins une caractéristique d'enveloppe des signaux numériques I et Q en bande de base afin de produire des signaux I et Q à enveloppe presque constante lorsque la largeur de bande des signaux numériques I et Q en bande de base est inférieure à une valeur de seuil.

3. Dispositif de communication (10, 10') selon la revendication 1, dans lequel ledit processeur (12, 12') est configuré pour extraire ladite au moins une caractéristique d'enveloppe à partir d'au moins une partie d'un spectre des signaux numériques I et Q en bande de base lorsque la largeur de bande d'un signal d'amplitude des signaux numériques I et Q en bande de base est supérieure à une valeur de seuil.

4. Dispositif de communication (10, 10') selon la revendication 1, comprenant en outre des circuits I et Q (23a', 23b') couplés entre ledit processeur et ledit amplificateur de puissance.

5. Dispositif de communication (10, 10') selon la revendication 4, dans lequel chacun desdits circuits I et Q (23a', 23b') comprend un convertisseur numérique-analogique (CNA) (13a', 13b'), un filtre passe-bas (14a', 14b') couplé à une sortie dudit CNA et un mélangeur (15a', 15b') couplé à une sortie dudit filtre passe-bas.

6. Dispositif de communication (10, 10') selon la revendication 5, comprenant en outre un additionneur (16') configuré pour combiner des sorties desdits mélangeurs (15a', 15b') dans lesdits circuits I et Q (23a', 23b') et produire un signal de préamplification pour ledit amplificateur de puissance (18, 18').

7. Dispositif de communication (10, 10') selon la revendication 6, comprenant en outre un oscillateur (24') et un diviseur de fréquence (25') qui lui est couplé et qui coopère avec lesdits mélangeurs (15a', 15b') afin de déphaser les signaux de phase I et Q de quatre-vingt-dix degrés.

8. Dispositif de communication (10, 10') selon la revendication 1, comprenant en outre une antenne (22, 22') couplée audit amplificateur de puissance (18, 18').

9. Dispositif de communication (10, 10') selon la revendication 1, dans lequel les signaux numériques I et Q en bande de base comprennent au moins un des suivants : signal en bande de base LTE (Long Term Evolution) Advanced 3GPP et signal en bande de base IEEE 802.16m (WiMAX).

10. Procédé de fonctionnement d'un dispositif de communication (10, 10'), comprenant l'étape consistant à :
utiliser un codeur (11, 11') pour produire des signaux numériques en bande de base en phase (I) et en quadrature (Q) ;
le procédé étant **caractérisé par** les étapes consistant à :
utiliser un processeur (12, 12') couplé audit codeur (11, 11') pour extraire au moins une caractéristique d'enveloppe des signaux numériques I et Q en bande de base en fonction d'une largeur de bande des signaux numériques I et Q en bande de base ; et
utiliser un amplificateur de puissance (18, 18') couplé en aval dudit processeur pour produire un signal I et Q amplifié en fonction de ladite au moins une caractéristique d'enveloppe.

11. Procédé selon la revendication 10, comprenant en outre l'étape consistant à utiliser le processeur (12, 12') pour extraire ladite au moins une caractéristique d'enveloppe des signaux numériques I et Q en bande de base afin de produire des signaux I et Q à enveloppe presque constante lorsque la largeur de bande d'un signal d'amplitude des signaux numériques I et Q en bande de base est inférieure à une valeur de seuil.

12. Procédé selon la revendication 10, comprenant en outre l'étape consistant à utiliser le processeur (12, 12') pour extraire ladite au moins une caractéristique d'enveloppe à partir d'au moins une partie d'un spectre des signaux numériques I et Q en bande de base lorsque la largeur de bande des signaux numériques I et Q en bande de base est supérieure à une valeur de seuil.

13. Procédé selon la revendication 10, comprenant en outre l'étape consistant à utiliser une antenne (22, 22') couplée audit amplificateur de puissance (18, 18') pour émettre les signaux I et Q amplifiés.

14. Procédé selon la revendication 10, dans lequel les signaux numériques I et Q en bande de base comprennent au moins un des suivants : signal en bande de base LTE (Long Term Evolution) Advanced 3GPP et signal en bande de base IEEE 802.16m (WiMAX).
